# EUROPÄISCHE PATENTSCHRIFT

(11) **EP 1 645 340 B1**
(45) Veröffentlichungstag und Bekanntmachung des Hinweises auf die Patenterteilung: **27.10.2010**
(21) Anmeldenummer: 05021492.3
(22) Anmeldetag: 30.09.2005
(51) Int. Cl.: B07C 5/34, B07C 5/38, B65G 17/46

(54) **Sortiervorrichtung und Fördervorrichtung für Stückgut sowie Verfahren zum Sortieren oder Fördern von Stückgut**
Systems and method for sorting or conveying of articles
Dispositifs et méthode pour trier ou convoyer des articles

(30) Priorität: 06.10.2004 DE 102004048515
(43) Veröffentlichungstag der Anmeldung: 12.04.2006
(73) Patentinhaber: Krones AG, 93073 Neutraubling (DE)
(72) Erfinder: Wentsch, Isabella, 75173 Pforzheim (DE)
(74) Vertreter: Grünecker, Kinkeldey, Stockmair & Schwanhäusser Anwaltssozietät

(56) Entgegenhaltungen:
- EP-A- 0 431 268
- EP-A- 1 327 591
- DE-A1- 4 133 114
- DE-C1- 4 332 434

## Beschreibung

Die Erfindung betrifft eine Sortiervorrichtung und eine Fördervorrichtung für Stückgut sowie ein Verfahren zum Sortieren oder Fördern von Stückgut.

Rücklaufendes Leergut (Stückgut) aus dem Getränkehandel muss zur Wiederverwertung sortenrein vorliegen. Da jedoch die Flaschen in der Regel nicht sortenrein zurückkommen, müssen diese sortiert werden.

Dazu sind beispielsweise aus der EP 0 569 689 ein Verfahren und eine Vorrichtung zum Sortieren von Flaschen bekannt. Hierbei werden Flaschen aus Kästen mit einem Packkopf und mit einem Handhabungsroboter entnommen und dadurch sortiert, dass sie auf verschiedene Ablagepositionen abgestellt werden. Ein Teil der Flaschen wird auf ein Förderband gestellt und einer Waschmaschine zugeführt, wohingegen ein anderer Teil der Flaschen in Kästen gepackt wird.

Aus der DE 43 32 434 C1 ist ein Verfahren und eine Vorrichtung zum sortieren von Verschieden artigen Gegenständen nach deren Merkmalen bekannt.

Aus der DE 42 00 546 A1 sind ein Verfahren und eine Vorrichtung zum Behandeln von Flaschen bekannt. Hier werden Flaschen auf einem umlaufenden Förderer inspiziert und nach Fehlermerkmalen klassifiziert. Je nach Klassifikationssignal werden die Flaschen dann an verschiedenen Positionen von dem umlaufenden Förderer abgenommen und verschiedenen Abförderern zugeführt.

Nachteilig ist hierbei, dass der umlaufende Förderer sehr viele kostenintensive Klammerelemente aufweist, die jedoch in dem größten Teil des Umlaufs nicht genutzt werden. Weiterhin ist hierbei nachteilig, dass das System auf eine feste Anzahl von Abförderern und damit von möglichen Fehlern der Flaschen festgelegt ist.

Aus der DE 41 33 114 ist ein Fördersystem für Stückgut bekannt. Hier wird das Stückgut wie Flaschen oder Behälter bei einer Aufgabestation auf eine geschlossene Förderbahn gegeben und zu einer Abgabestation geführt. Das Fördersystem umfasst Läufer, die das Stückgut transportieren und von einem Langstator angetrieben werden. Jeweils vor einer Bearbeitungsstation wird das Stückgut von dem Läufer getrennt, durchläuft die Bearbeitungsstation und wird danach wieder von einem Läufer aufgenommen, der die Bearbeitungsstation umfahren hat.

Nachteilig ist hierbei, dass nur eine Sorte von Flaschen behandelt werden kann, da der Weg für alle Flaschen gleich ist.

Aus der DE 100 40 531 A1 ist eine Fördervorrichtung zum Transportieren von Behältern wie Kunststoffflaschen bekannt. Die Flaschen werden in den Aufnahmen von nicht angetriebenen Schiebekörpern oder von Vorschubeinheiten aufgenommen und können entlang von Abstützflächen transportiert werden.

Nachteilig ist auch hierbei, dass diese Fördervorrichtung nur für eine Flaschenart ausgelegt ist und alle Flaschen den selben Weg nehmen.

Aufgabe der vorliegenden Erfindung ist es, eine Sortiervorrichtung und eine Fördervorrichtung für Stückgut sowie ein Verfahren zum Fördern oder Sortieren von Stückgut zu schaffen, das in Bezug auf Flaschenarten und nachträgliche Erweiterungen möglichst flexibel ist.

Diese Aufgabe wird gelöst durch eine Sortiervorrichtung nach Anspruch 1, eine Fördervorrichtung nach Anspruch 22 und ein Verfahren zum Fördern oder Sortieren von Stückgut nach Anspruch 23. Vorteilhafte Ausführungsformen sind in den abhängigen Ansprüchen offenbart.

Dadurch, dass die Sortier- und die Fördervorrichtung Haltevorrichtungen aufweisen, die jeweils einer einzelnen Transporteinheit zugeordnet sind und diese einzeln steuerbar sind, ist eine große Flexibilität bei der Maschinenkonstruktion gewährleistet. Bei einer nachträglichen Erweiterung der Sortier- oder Fördervorrichtung können die benötigten Einzeltransporteinheiten mit den Haltevorrichtungen hinzugefügt werden. Ein Umbau der vorherigen bestehenden Haltevorrichtung ist nicht nötig. Die einzeln steuerbaren Transporteinheiten können einer auswählbaren Stückgutbehandlungsstelle oder Abgabestelle zugeleitet werden.

Bei dem Verfahren wird das Stückgut bei einer Aufnahmestelle mit einer Haltevorrichtung aufgenommen, in der Haltevorrichtung transportiert und bei einer Abgabestelle abgegeben, wobei die Haltevorrichtung einer einzelnen Transporteinheit zugeordnet ist, die einzeln steuerbar einer auswählbaren Stückgutbehandlungs- oder Abgabestelle zugeleitet werden.

Dadurch ist es möglich, einzelne Flaschen oder Gruppen von Flaschen jeweils individuelle Transportwege durchlaufen zu lassen. Vorzugsweise ist hier für die Sortiervorrichtung ein Transportbahnnetz vorgesehen, auf dem die Transporteinheiten bewegt werden können. Dies ist vorzugsweise so ausgeführt, dass von einer Abnahmestelle jeweils eine Transportbahn zurück zur Aufnahmestelle führt ohne an den sonstigen Abgabestellen vorbei zu führen. Dies erlaubt ein möglichst zügiges Rückkehren der Transporteinheiten zur Aufnahmestelle, sodass mit einer möglichst geringen Anzahl von Transporteinheiten eine möglichst große Kapazität erreicht werden kann.

Vorteilhaft ist eine Ausführungsform bei der die Haltevorrichtung gegenüber der Transporteinheit verstellbar, d. h. bevorzugterweise höhenverstellbar ist. Dadurch kann das Stückgut durch eine vertikalbewegung von einem Transportband aufgenommen oder auf dieses abgestellt werden, oder auch in eine sonstige Aufnahmeeinheit eingeführt werden.

Vorteilhaft ist hierbei eine Ausführungsform bei der der Transport zwischen Aufnahme- und Aufgabestelle möglichst schnell erfolgt, wobei bei der Abgabestelle jedoch eine Geschwindigkeitsanpassung der Transporteinheit erfolgt, sodass die Übergabe beispielsweise an einen Abförderer oder eine Aufnahmeeinheit mit möglichst angepasster Geschwindigkeit erfolgt, sodass ein Wackeln, Taumeln oder Umfallen des Stückguts verhindert wird.

Vorteilhaft ist weiterhin eine Ausführungsform, bei der die Abgabe nicht auf Abförderer, sondern in Aufnahmeeinheiten, wie etwa Flaschenkästen, erfolgt. Die Aufnahmeeinheit ist hierbei vorzugsweise durch Positioniermittel so positionierbar, dass das Stückgut, wie etwa eine Flasche, an die in der Aufnahmeeinheit vorgesehene Position abgegeben werden kann. Während die Transporteinheit durch die Bewegungsmöglichkeit entlang der Bahn verschiedene Positionen über der Aufnahmeeinheit einnehmen kann, kann die Aufnahmeeinheit selbst in Richtung quer zu dieser Richtung positionierbar sein, sodass jede Position in der Aufnahmeeinheit erreicht werden kann.

Die einzelne Steuerbarkeit der Transporteinheiten kann beispielsweise dadurch ermöglicht werden, dass jede Transporteinheit eine Identifikation umfasst (Strichcode, auslesbarer Speicherchip, aufgedruckter, aufgeklebter und/oder eingravierter alphanumerischer Code, etc.) und dass während des Transportvorgangs diese Identifikationseinrichtung zum Leiten zur vorgesehenen Abgabenstelle eingesetzt wird. Bei der Aufnahmeeinheit kann beispielsweise in einem zentralen Prozessrechner festgelegt werden, dass eine Transporteinheit mit einer bestimmten Identifikation an eine bestimmte Abgabestelle geleitet werden soll. Die von dem zentralen Prozessrechner gesteuerten weichen können so die Transporteinheit zur vorgesehenen Abgabestelle leiten.

Auch ist es möglich, die vorgesehene Abgabestelle nicht nur in einem zentralen Prozessrechner, sondern beispielsweise auch in einem Informationsspeicher bei der Transporteinheit zu speichern. Dieser Speicher kann mechanisch, elektronisch, optisch oder sonst wie ausgelegt sein. Eine mechanische Ausführungsform bestände beispielsweise darin, dass verschiebbare Stifte, Hebel oder ähnliches so eingestellt werden, dass die Transporteinheit durch entsprechende Führungen, die mit den Stiften oder Hebeln zusammenwirken, zur vorgesehenen Abgabestelle geleitet wird. Ein elektronischer oder optischer Informationsspeicher kann entsprechend während des Transports ausgelesen werden, um so die Zielführung der Transporteinheit vorzunehmen.

Eine Ausführungsform der Sortier- und Fördervorrichtung ist in den Figuren dargestellt. Diese und ein Verfahren zum Sortieren oder Fördern von Stückgut sollen anhand der beiliegenden Figuren erläutert werden. Dabei zeigt:
- Figur 1: eine schematische Draufsicht auf eine Sortier- oder Fördervorrichtung;
- Figur 2: eine dreidimensionale schematische Ansicht auf eine Sortier- oder Fördervorrichtung;
- Figur 3: eine dreidimensionale schematische Ansicht einer Transporteinheit;
- Figur 4: eine dreidimensionale schematische Ansicht einer anderen Transporteinheit;
- Figur 5: eine schematische Draufsicht auf eine andere Ausführungsform einer Sortier- oder Fördervorrichtung;
- Figur 6: eine schematische Draufsicht auf eine weitere Ausführungsform einer Sortier- oder Fördervorrichtung;
- Figur 7: eine schematische Draufsicht auf noch eine weitere Ausführungsform einer Sortier- oder Fördervorrichtung;
- Figur 8: eine schematische Draufsicht auf eine Abgabestelle.

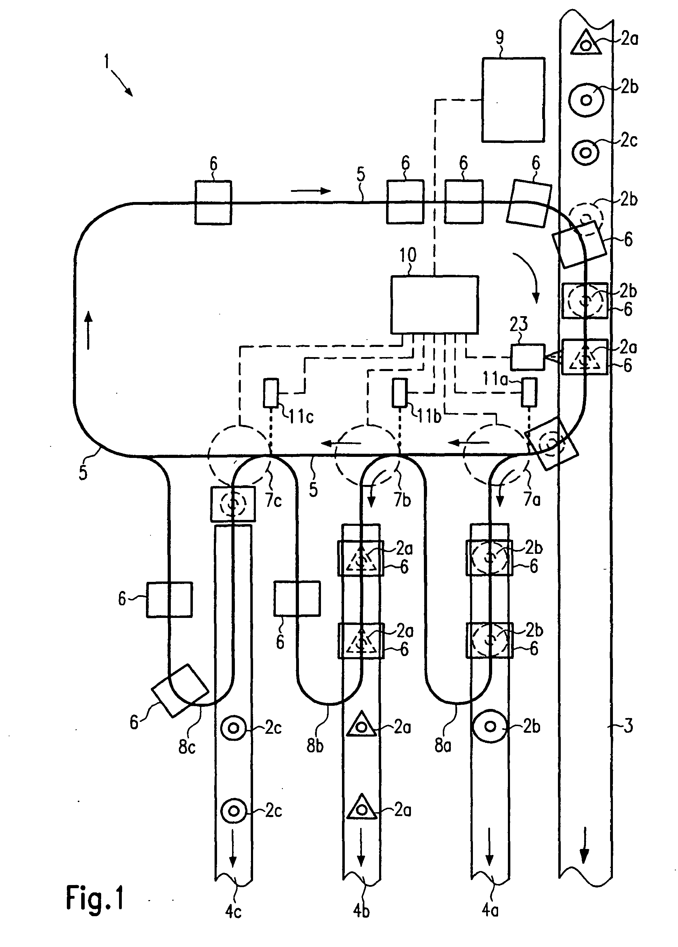

Figur 1 zeigt eine Transport- oder Fördervorrichtung 1. Auf einem Förderband 3 wird Stückgut 2a, 2b, 2c zugefördert. Im Folgenden wird beispielhaft für Stückgut nur noch Bezug auf Flaschen genommen.

Die Flaschen 2a, 2b und 2c sind verschiedene Flaschentypen. Die Flasche 2a hat einen dreieckigen Querschnitt, die Flasche 2b einen großen Durchmesser und die Flasche 2c einen kleinen Durchmesser. Die Flaschen 2a - 2c sind beispielsweise PET-Flaschen. Die verschiedenen Flaschentypen 2a - 2c sollen sortiert werden.

Auf einer in sich geschlossenen Förderbahn 5 können Transporteinheiten 6 umlaufen. Die Transporteinheiten 6 sind mit Mitteln ausgestattet, Flaschen 2a - 2c zu halten.

Dort, wo sich die Förderbahn 5 über dem Zuförderer 3 befindet, ist die Aufnahmestelle.

Stromauf der Aufnahmestelle ist eine Inspektionseinheit 9 angeordnet, die die drei verschiedenen Flaschentypen erkennen kann. Dies kann beispielsweise mit einer oder mehreren Lichtschranken oder Kameras und Bilderkennung oder ähnlichem geschehen. Das Ergebnis der Inspektion kann einem Zentralprozessrechner 10 über die gestrichelt dargestellte Informationsleitung zugeführt werden.

Der zentrale Prozessrechner 10 kann ein Informationsübertragungsgerät 23 steuern, mit dem eine Transporteinheit 6 eine Information aufgeschrieben bekommt. Die Transporteinheiten 6 sind beispielsweise mit einem Speicher (Transponder) versehen, der Informationen speichern kann, die von dem Gerät 23 übermittelt werden. Bei dem in Figur 1 dargestellten zustand würde das Gerät 23 der vor ihm befindlichen Transporteinheit 6 die Information aufschreiben, dass es zu dem mittleren Abförderer 4b geleitet werden soll.

Die Inspektionseinheit 9 kann auch bei oder stromab der Aufnahmestelle angeordnet sein. Dies erleichtert die zuordnung des Inspektionsergebnisses zu der jeweiligen Transporteinheit 6.

Im unteren Teil in Figur 1 sind drei Abförderbänder 4a, 4b und 4c dargestellt. Über jedem Abförderer sind Wegstrecken 8a, 8b und 8c dargestellt, entlang deren sich die Transporteinheiten 6 bewegen können.

Dort wo sich der Streckenabschnitt 8a, 8b, 8c jeweils über dem Abförderband 4a, 4b, 4c befindet, ist die Abgabestelle.

Die Streckenabschnitte 8a, 8b, 8c zweigen von der geschlossenen Strecke 5 an den Weichen 7a, 7b oder 7c ab. Bei jeder Weiche 7a, 7b, 7c befinden sich Mittel 11a, 11b, 11c mit denen es möglich ist, festzustellen, ob eine Transporteinheit 6 auf der Strecke 5 bleiben soll oder auf eine der Streckenabschnitte 8a, 8b oder 8c abzweigen soll. Diese Mittel können Mittel sein, die die mit dem Gerät 23 vermittelte Information auslesen können. Entsprechend der ermittelten Information können die Weichen 7a, 7b, 7c sich schalten oder von dem zentralen Prozessrechner 10 geschaltet werden.

Für den Fall, dass die Information über die Zielabgabestelle mechanisch beispielsweise in der Anordnung von mechanischen Stiften gespeichert ist, kann die Transporteinheit 6 durch die Stifte durch entsprechende Führungen oder Schienen, auch ohne eine explizite Erkennung, Verwertung und Weichenstellung, an entsprechend ausgebildete Weichen 7a, 7b, 7c geleitet werden. Auch kann die Transporteinheit 6 so ausgestaltet sein, dass sie in sonstiger Weise feststellt, an welcher Weiche sie sich befindet und dann den entsprechenden Weg wählen.

Soll beispielsweise eine Transporteinheit 6 auf den Streckenabschnitt 8a geleitet werden, kann ein Stift bei der Aufgabestelle so nach unten gedrückt werden, dass er an der Weiche 7a in eine Führung greift, sodass die Transporteinheit 6 auf den Streckenabschnitt 8a geleitet wird. Entsprechendes gilt für die anderen Abschnitte.

An den Abgabestellen über den Bändern 4a, 4b, 4c können die Transporteinheiten 6 die gehaltenen Flaschen absenken und auf die Förderbänder 4a, 4b, 4c stellen. Die leeren Transporteinheiten 6 kehren anschließend zu der Hauptstrecke 5 zurück.

Um Kollisionen zwischen Transporteinheiten 6, die sich bereits auf der Hauptstrecke 5 befinden, und solchen, die sich auf die Hauptstrecke 5 von einer der Streckenabschnitte 8a, 8b, 8c einreihen wollen, zu vermeiden, können entsprechende Überwachungseinrichtungen oder Kontrollmechanismen mechanisch, elektronisch oder sonst wie vorgesehen sein.

Die leeren Transporteinheiten 6 können von den Abgabestationen über den Bändern 4a, 4b, 4c auf der Hauptstrecke 5 bis vor die Aufnahmestelle über dem Förderband 3 geleitet werden.

Die Hauptstrecke 5 kann eine Anordnung von Schienen, Führungen, Gleisen oder ähnlichem sein, auf der sich die Transporteinheiten 6 bewegen können. Es könnten auch eine Magnet- oder eine Luftschwebebahn vorgesehen sein, bei der eine Auftriebskraft durch ein Magnetfeld oder durch ausströmende Luft erzeugt wird.

Der Antrieb der Transporteinheiten 6 kann mit Ketten, Bändern, Gummiriemen oder ähnlichem erfolgen, die entlang der Strecken 5 sowie den Streckenabschnitten 8a, 8b, 8c entlang laufen, erfolgen. Hierbei können die Fördereinrichtungen 6 sich mehr oder weniger stark an solche Kettenbänder oder Gummiriemen koppeln und dadurch eine variable Geschwindigkeit erhalten. Auch ist ein Antrieb über elektromagnetische Wechsel- oder über Magnetfelder (Linearmotor) möglich. Ferner ist es denkbar, die Transporteinheiten 6 mit einer Luftströmung zu beaufschlagen und so anzutreiben. An sich ist jeder denkbare Antrieb möglich.

Die Transporteinheiten 6 können hierbei entweder aktiv oder passiv sein. Dies bedeutet, dass beispielsweise ein Motor in jeder Antriebseinheit 6 vorgesehen ist, sodass diese aktiv ist. Passiv wäre sie dadurch, dass sie von anderen aktiven Elementen der Strecke 5 bzw. den Streckenabschnitten 8a, 8b, 8c mitgenommen wird.

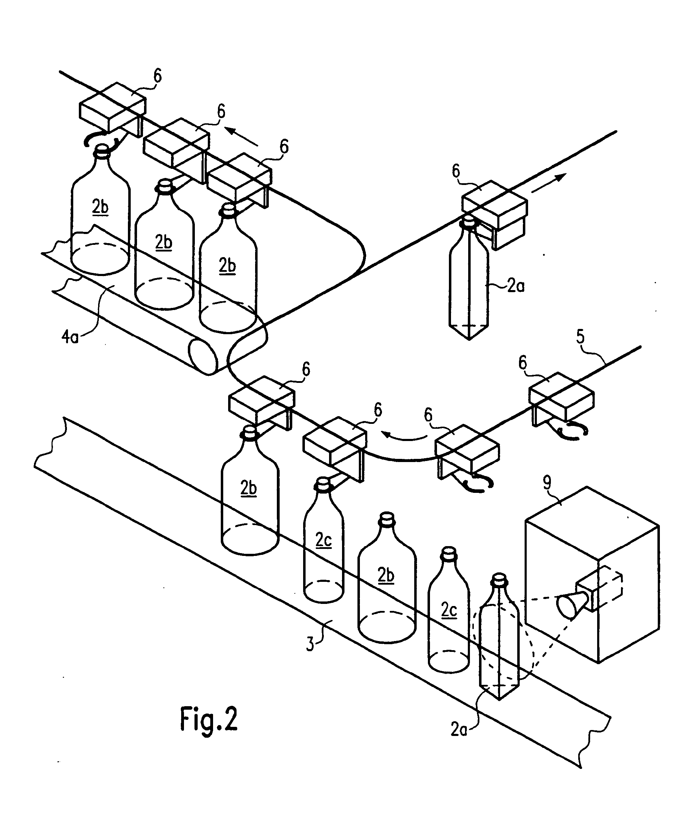

In Figur 2 ist eine dreidimensionale schematische Ansicht einer Sortier- oder Fördervorrichtung 1 gezeigt. Auf dem im Vordergrund angeordneten Förderband 3 sind mehrere Flaschen 2a, 2b und 2c angeordnet. An der Aufnahmestelle ist eine Transporteinheit 6 dargestellt, die eine abgesenkte Greifklammer hat und die eine Flasche 2c mit einem kleinen Durchmesser greift.

Eine andere Transporteinheit 6 hält eine Flasche 2b mit einem großen Durchmesser, wobei diese Flasche bereits von dem Band 3 angehoben ist.

Im Bereich der Abgabestelle über dem Förderband 4a sind drei Flaschen 2b mit einem großen Durchmesser dargestellt.

Die rechte der drei Flaschen ist durch die Transporteinheit 6 angehoben und befindet sich noch nicht vollständig über dem Transportband 4a.
Die mittlere der drei Flaschen ist auf das Förderband 4a abgestellt, wird aber noch durch die Transporteinheit 6 gehalten, da der Greifer abgesenkt und geschlossen ist.
Die linke der drei Flaschen 2b steht alleine auf dem Förderband 4a und die Transporteinheit 6 ist nicht mehr in Verbindung mit der Flasche, da der Greifer geöffnet und angehoben wurde. Die vorrichtung ist so ausgestaltet, das eine Transporteinheit 6 nacheinander diese 3 Zustände durchlaufen kann, wobei ihre Geschwindigkeit der Geschwindigkeit des Förderbandes 4a entspricht.

In Figur 2 ist etwa in der Bildmitte eine Transporteinheit 6 dargestellt, die eine dreieckige Flasche 2a hält. Diese Flasche ist auf dem Weg zur nicht dargestellten Abgabestelle über dem Band 4b (s. Fig. 1).

In der rechten Bildhälfte sind an der Strecke 5 zwei leere Transporteinheiten 6 dargestellt, die sich auf die Aufnahmestelle über dem Zuförderer 3 zubewegen.

Ganz rechts ist die Inspektionsstation 9 mit einer symbolisch dargestellten Kamera gezeigt.

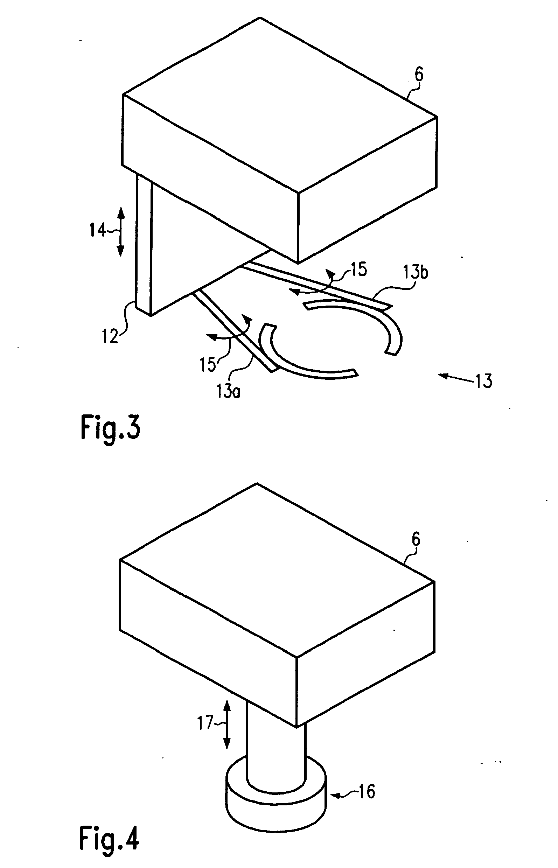

Die Figuren 3 und 4 zeigen mögliche Ausführungsformen der Transportelemente 6.

In Figur 3 ist ein Greifer 13 mit zwei Greiferarmen 13a und 13b dargestellt. Diese Greiferarme 13a und 13b können in den Richtungen 15 verschwenkt werden und so eine Flasche greifen oder loslassen. Die Greifer sind ausgebildet, eine Flasche an ihrem Hals- oder Kopfteil zu halten. Sie können aber auch ausgebildet sein, den Flaschenrumpf zu halten. Der Greifer 13 ist an einem höhenverstellbaren Element 12 angeordnet, dass in Richtung 14 auf und ab bewegt werden kann. Dadurch ist es möglich, gegriffene Flaschen hochzuheben und abzusenken.

In Figur 4 ist eine Ausführungsform einer Transporteinheit 6 dargestellt, die eine Greiftulpe 16 umfasst, mit der Flaschenköpfe gegriffen werden können. Diese Greifertulpe 16 ist an einem auf und ab bewegbaren Kolben 17 angeordnet, um die Flaschen so anzuheben und abzusenken. Grundsätzlich ist jede Art der Flaschenhalterung möglich. Die Figuren 3 und 4 dienen nur als mögliche Ausführungsform.

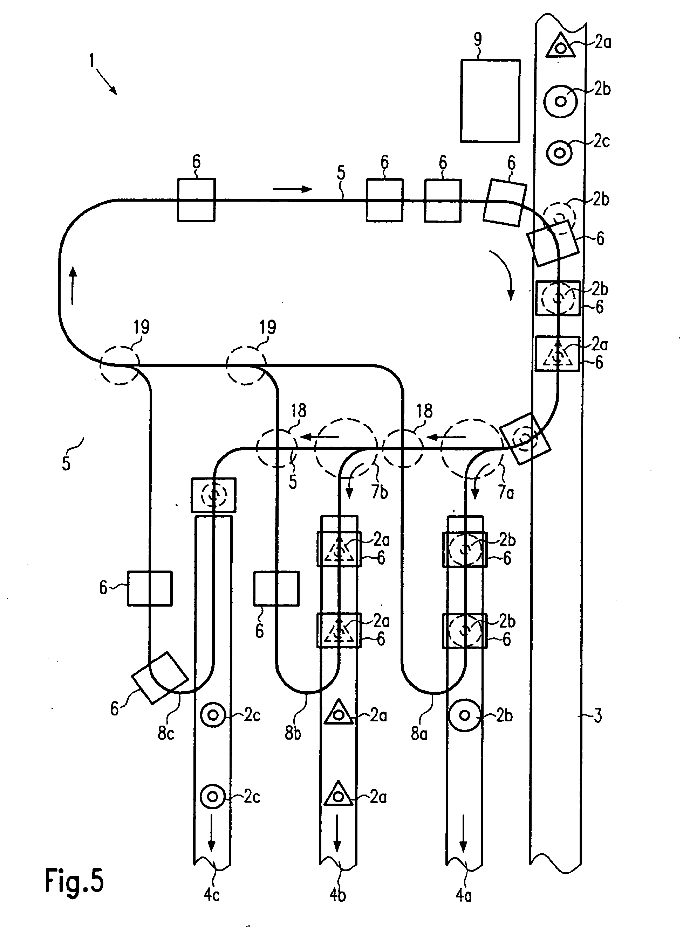

In Figur 5 ist eine andere Streckenführung 5 im Vergleich zu Figur 1 dargestellt.

Hier gibt es keine durchgehende Strecke 5, sondern vielmehr verzweigt sich die Strecke 5 an den drei Abgabestellen in drei parallele Streckenabschnitte die anschließend wieder zu einem Streckenabschnitt bei den Weichen 19 zusammenlaufen. Dadurch kann eine Weiche 7c entfallen. Bei dieser Ausführungsform werden die leeren Transporteinheiten 6 zurücktransportiert, ohne die selben Strecken benützen zu müssen, wie die beladenen Transporteinheiten 6.

Bei der in Figur 5 dargestellten Ausführungsform überkreuzen sich die Streckenabschnitte 8a, 8b, 8c mit den Streckenabschnitten 5 bei den Kreuzungspunkten 18. Diese Kreuzungen können auf dem selben Höhenniveau sein, oder aber auch dadurch realisiert werden, dass die kreuzenden Streckenabschnitte auf verschiedenen Höhen übereinander geführt werden. Hierbei ist es vorteilhaft, wenn der Streckenabschnitt für die leeren Transporteinheiten 6 über den Streckenabschnitt geführt wird, in dem beladene Transporteinheiten 6 vorhanden sind, da dann die Streckenabschnitte dichter übereinander geführt werden können, da die leeren Transporteinheiten 6 nach unten nicht so viel Platz benötigen, wie die Transporteinheiten 6, die mit einer Flasche beladen sind, die nach unten heraushängt.

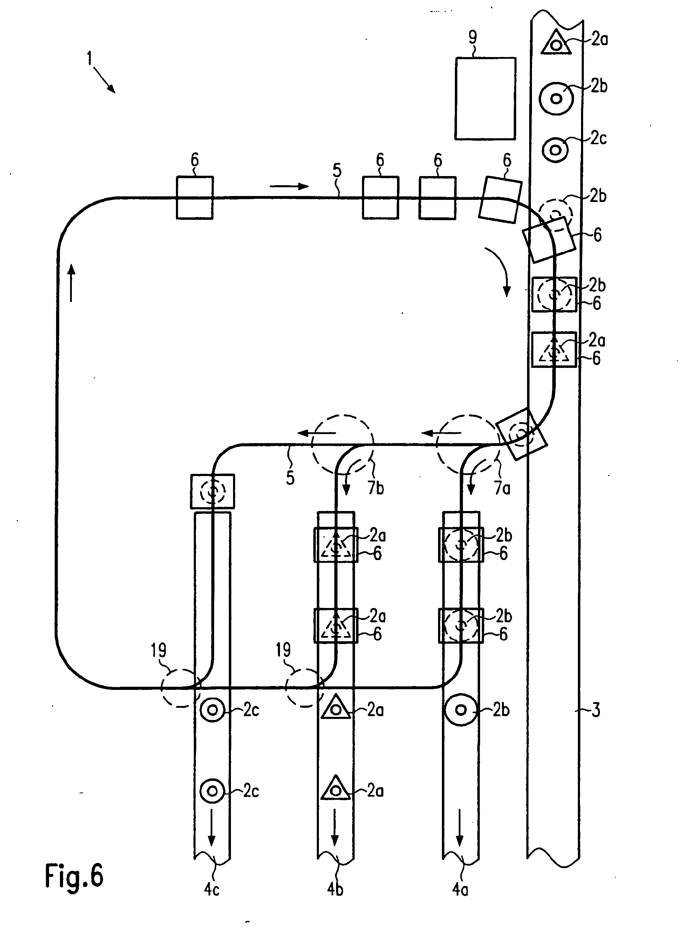

In Figur 6 ist eine weitere Ausführungsform einer Sortier- oder Fördervorrichtung gezeigt, bei der die Streckenabschnitte 8a, 8b, 8c stromab von den Abgabestellen sich ohne Überkreuzungen mit anderen Streckenabschnitten zu einer einzelnen Strecke an den Weichen 19 zusammenführen.

Hierbei überqueren die Strecken dann aber die Förderbänder 4b und 4c. Dabei muss genügend Höhe für den Abtransport der Flaschen auf den Bändern 4b und 4c gewährleistet werden.

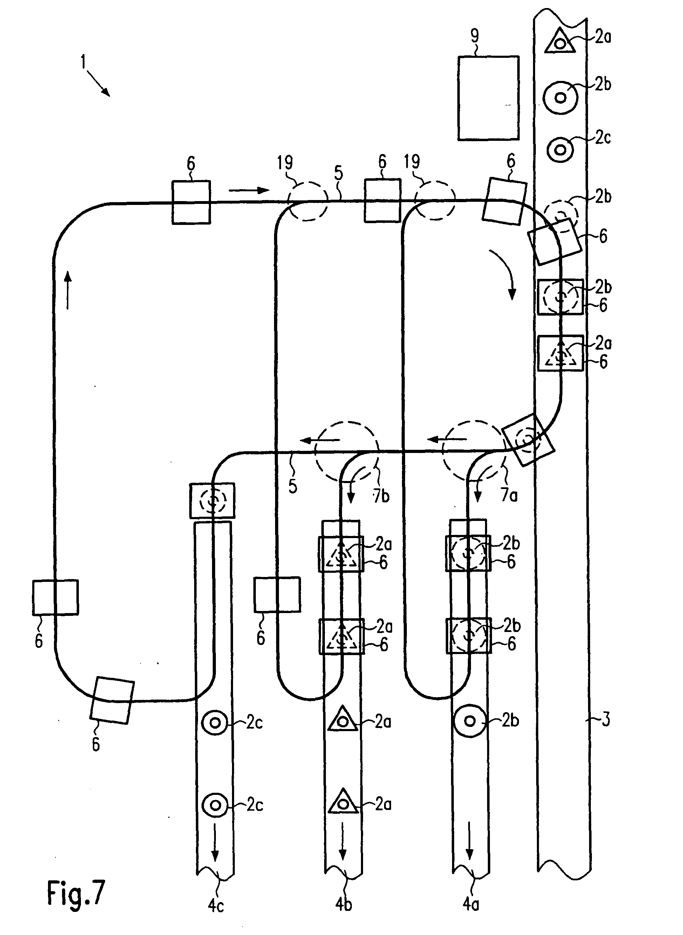

In Figur 7 ist eine weitere Ausführungsform gezeigt, bei der sich an jede Abgabestelle über einem der Förderbänder 4a, 4b, 4c ein Streckenabschnitt anschließt, der auf kürzestmöglichem Wege zu der Aufnahmestelle über den Förderer 3 zurückführt. Dies erlaubt kurze Rückführungszeiten und erlaubt somit eine reduzierte Anzahl von Transporteinheiten 6, da die Leerlaufzeiten reduziert sind.

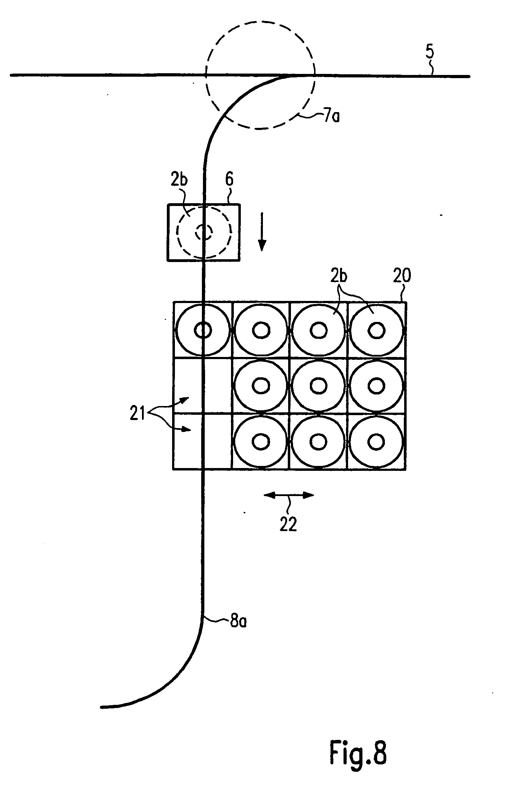

In Figur 8 ist schematisch eine alternative Ausführungsform gezeigt, bei der an den Abgabestellen keine Förderbänder 4a, 4b, 4c vorgesehen sind. Exemplarisch ist die Situation bei dem Streckenabschnitt 8a aus Figur 1 gezeigt. Die Abgabestelle aus Figur 8 kann auch bei den Anlagen aus den anderen Figuren vorgesehen sein.

Eine Aufnahmeeinheit 20 in Form eines Getränkekastens ist unterhalb des Streckenabschnitts 8a angeordnet. Die Transporteinheiten 6 können über den Getränkekasten 20 geführt werden. Der Getränkekasten 20 ist selber in der Richtung 22 positionierbar. Die Richtung 22 liegt quer zur Richtung der Bewegung der Transporteinheiten 6.

Der Getränkekasten 20 hat zwölf Plätze für Flaschen 2b, von denen 10 bereits besetzt sind. Der Getränkekasten 20 ist so positioniert, dass die leeren beiden Positionen 21 sich unterhalb des Streckenabschnitts 8a befinden. Dadurch kann die Transporteinheit 6 eine Flasche 2b in diese Positionen fallen lassen oder abstellen. Vorteilhafterweise sind Zuführmittel für leere Getränkekisten und Abführmittel für volle Getränkekisten 20 vorgesehen.

Im Folgenden soll beispielhaft das Verfahren zum Fördern und Sortieren anhand von Figur 1 erläutert werden.

Auf dem Förderband 3 laufen Flaschen 2a, 2b, 2c in Pfeilrichtung ein. Die Flaschen 2a, 2b, 2c werden mit der Inspektionseinrichtung 9 inspiziert, um festzustellen, welcher Flaschentyp vorliegt. Die gewonnene Information wird an den zentralen Prozessrechner 10 übermittelt. Die so klassifizierten Flaschen werden von den Transporteinheiten 6 aufgenommen. Den Transporteinheiten 6 wird mit dem Gerät 23 die Information vermittelt, in welche Abgabestelle sie geleitet werden sollen. Die Transporteinheiten 6 bewegen sich entlang der Hauptstrecke 5 zur Weiche 7a. Ein Mittel 11a liest die von dem Gerät 23 vermittelte Information aus und kann mit Hilfe oder auch ohne Hilfe des zentralen Prozessrechners 10 die weiche 7a so einstellen, dass die Transporteinheit 6 auf der Hauptstrecke 5 entweder geradeaus läuft oder nach links auf die Abgabestelle über dem Förderband 4a abzweigt.

Im Folgenden soll angenommen werden, dass die Transporteinheit 6 zu dem mittleren Förderband 4b gelangen soll. Sie wird an der Weiche 7a also geradeaus laufen. Bei der Weiche 7b wird die Information erneut von dem Lesegerät 11b ausgewertet, sodass die Transporteinheit 6 an der Weiche 7b auf den Streckenabschnitt 8b geleitet wird. Dort kann die Geschwindigkeit der Transporteinheit 6 so angepasst werden, dass sie sich gleich schnell wie die Oberfläche des Förderbandes 4b bewegt. Die Flasche 2a wird dann von der Transporteinheit 6 abgesenkt, sodass sie ohne Relativbewegung zu dem Förderband 4b auf diesem abgesetzt wird. Die Transporteinheit 6 lässt dann die Flasche los und folgt dem Streckenabschnitt 8b zurück zu der Hauptstrecke 5. Die Flasche 2a läuft auf dem Förderband 4b in Pfeilrichtung aus. Die leere Transporteinheit 6 läuft auf der Hauptstrecke 5 zurück zur Aufnahmestelle über dem Zuförderer 3. Auf diese Weise ist es möglich, die drei Flaschentypen 2a, 2b, 2c auf die drei Förderbänder 4a, 4b, 4c sortenrein abzustellen.

Während in den Figuren verschiedene Flaschentypen mit verschiedenen Flaschenformen gezeigt sind, können auch andere Merkmale, die für die Sortierung relevant sind, erkannt werden. Dies ist beispielsweise eine Befüllung, Scuffing, Risse oder Brüche, verschmutzungen, die Farbe oder Transparenz der Flaschen, der Etiketten- oder Verschlusszustand, oder Ähnliches.

Die Lesegeräte 11a, 11b, 11c können auch dazu ausgebildet werden, nicht eine von dem Schreibgerät 23 übermittelte Information der Transporteinheiten 6 auszulesen, sondern eine Identifikation, beispielsweise ein Strichcode, eine in einem auslesbaren Speicher gespeicherte Identifikation oder einen angebrachten alphanumerischen Code auszulesen. In dem zentralen Prozessrechner ist gespeichert, an welche Abgabestelle eine Transporteinheit mit der entsprechenden Identifikation geleitet werden soll, so dass entsprechend eine Leitung an den Weichen 7a, 7b oder 7c stattfindet.

## Patentansprüche

1. Sortiervorrichtung für Stückgut, wie beispielsweise Flaschen, mit mindestens einer Aufnahmestelle und mehreren Abgabestellen und Haltevorrichtungen zum Halten des Stückguts, wobei die Haltevorrichtungen (13, 16) bei einzelnen Transporteinheiten (6) angeordnet sind, die einzeln steuerbar von einer Aufnahmestelle zu einer auswählbaren Abgabestelle geleitet werden können, **gekennzeichnet durch** ein Transportbahnnetz (5, 8a, 8b, 8c) auf dem die Transporteinheiten (6) bewegt werden können, wobei Weichen (7a, 7b, 7c) zum Leiten der Transporteinheiten (6) zu den verschiedenen Abgabestellen vorgesehen sind.

2. Sortiervorrichtung nach Anspruch 1, **dadurch gekennzeichnet, dass** von mehreren Abnahmestellen jeweils eine Transportbahn zurück zur Aufnahmestelle führt, ohne an den sonstigen Abgabestellen vobeizuführen.

3. Sortiervorrichtung nach Anspruch 1 oder 2, **dadurch gekennzeichnet, dass** Schienen, Führungen, Gleise, Magnet- oder Luftschwebebahnen für die Transporteinheiten (6) vorgesehen sind.

4. Sortiervorrichtung nach einem der Ansprüche 1 bis 3, **dadurch gekennzeichnet, dass** als Antrieb für die Transporteinheiten (6) Ketten, Bänder, Gummiriemen, elektromagnetische Wechselfelder, Magnetfelder oder Luftströmungen vorgesehen sind.

5. Sortiervorrichtung nach Anspruch 4, **dadurch gekennzeichnet, dass** der Antrieb an den Transporteinheiten (6) angeordnet ist.

6. Sortiervorrichtung nach einem der Ansprüche 1 bis 5, **dadurch gekennzeichnet, dass** die Haltevorrichtungen (13, 16) Klammern (13), Tulpen (16), Sauger, Greifer oder Klemmbacken zum Halten des Stückguts (2a, 2b, 2c) umfassen.

7. Sortiervorrichtung nach einem der Ansprüche 1 bis 6, **dadurch gekennzeichnet, dass** die Haltevorrichtung (13, 16) gegenüber der Transporteinheit (6) verstellbar, vorzugsweise höhenverstellbar ist.

8. Sortiervorrichtung nach einem der Ansprüche 1 bis 7, **dadurch gekennzeichnet, dass** bei der Aufnahmestelle ein Zuförderband (3) vorgesehen ist, mit dem das Stückgut (2a, 2b, 2c) zur Aufnahmestelle gefördert werden kann.

9. Sortiervorrichtung nach einem der Ansprüche 1 bis 8, **dadurch gekennzeichnet, dass** die Abgabestellen Abförderer (4a, 4b, 4c) umfassen, um das Stückgut (2a, 2b, 2c) von der jeweiligen Abgabestelle abzufördern, wobei vorzugsweise eine Geschwindigkeitsanpassung der Transporteinheit (6) an einen Abförderer (4a, 4b, 4c) bei der Abgabe erfolgen kann.

10. Sortiervorrichtung nach einem der Ansprüche 1 bis 9, **dadurch gekennzeichnet, dass** an den Abgabestellen die Abgabe in Aufnahmeeinheiten, wie etwa Flaschenkästen (20), erfolgen kann.

11. Sortiervorrichtung nach Anspruch 10, **dadurch gekennzeichnet, dass** eine Transporteinrichtung für die Aufnahmeeinheiten, wie etwa ein Förderband oder ein Positioniermittel, mit dem die Aufnahmeeinheit mindestens in Richtung quer zur Transportrichtung der Transporteinheiten (6) bei der Abgabestelle positioniert werden kann, vorgesehen ist.

12. Sortiervorrichtung nach einem der Ansprüche 1 bis 11, **dadurch gekennzeichnet, dass** die Haltevorrichtungen (13, 16) zum Halten des Kopfes oder des Kragens einer PET-Flasche ausgebildet sind.

13. Sortiervorrichtung nach einem der Ansprüche 1 bis 12, **dadurch gekennzeichnet, dass** jede Transporteinheit (6) eine Identifikation beispielsweise in Form eines Strichcodes, eines auslesbaren Speichers oder eines angebrachten alphanumerischen Codes umfasst.

14. Sortiervorrichtung nach Anspruch 13, **dadurch gekennzeichnet, dass** die Sortiervorrichtung mindestens eine Identifikationserfassungseinrichtung zur Erfassung der Identifikation der Transporteinheit (6) umfasst, so dass die Transporteinheit (6) zur vorgesehenen Abgabestelle geleitetet werden kann.

15. Sortiervorrichtung nach einem der Ansprüche 1 bis 14, **dadurch gekennzeichnet, dass** eine Steuerungseinrichtung, wie etwa ein Prozessrechner (10), zur Leitung der Transporteinheiten (6) vorgesehen ist.

16. Sortiervorrichtung nach einem der Ansprüche 1 bis 15, **dadurch gekennzeichnet, dass** jede Transporteinheit (6) einen Informationsspeicher auf weist, der beispielsweise mechanisch, elektronisch oder optisch sein kann, in den die Zielabgabestelle gespeichert werden kann.

17. Sortiervorrichtung nach Anspruch 16, **dadurch gekennzeichnet, dass** Leseeinrichtungen (11a, 11b, 11 c) zum Auslesen des Informationsspeichers zwischen Aufnahmestelle und Abgabestelle vorgesehen sind.

18. Sortiervorrichtung nach einem der Ansprüche 16 oder 17, **dadurch gekennzeichnet, dass** bei der Aufnahmestelle eine Einrichtung (23) zum Speichern von Information in dem Informationsspeicher vorgesehen ist.

19. Sortiervorrichtung nach einem der Ansprüche 1 bis 18, **dadurch gekennzeichnet, dass** eine Inspektionseinrichtung (9) zum Inspizieren des Stückguts (2a, 2b, 2c) vorgesehen ist, mit der das Stückgut (2a, 2b, 2c) auf Merkmale untersucht werden kann, die für die Sortierung relevant sind, wie etwa äußere Form, Befüllung, Scuffing, Risse, Brüche, Verschmutzung, Stückguttyp, Transparenz, Farbe, Etikettenzustand, Verschlusszustand oder Ähnliches.

20. Verfahren zum Fördern oder Sortieren von Stückgut, insbesondere von Flaschen, mit den Schritten: Aufnehmen Stückguts mit Haltevorrichtungen bei einer Aufnahmestelle, Transportieren des Stückguts in den Haltevorrichtungen und Abgeben des Stückguts bei einer Abgabestelle, wobei die Haltevorrichtungen (13, 16) bei einzelnen Transporteinheiten (6) angeordnet sind, die einzeln steuerbar von der Aufnahmestelle zu mindestens einer auswählbaren Stückgutbehandlungs- oder Abgabestelle geleitet werden, **gekennzeichnet durch** ein Transportbahnnetz (5, 8a, 8b, 8c) auf dem die Transporteinheiten (6) bewegt werden können, wobei Weichen (7a, 7b, 7c) zum Leiten der Transporteinheiten (6) zu den verschiedenen Abgabestellen vorgesehen sind.

## Claims

1. Sorting device for piece goods, such as bottles, for example, having at least one pickup location and multiple delivery locations, and holding devices for holding the piece goods, the holding devices (13, 16) being situated at individual transport units (6) which may be conducted from a pickup location to a selectable delivery location while being individually controlled, **characterized by** a transport path network (5, 8a, 8b, 8c) on which the transport units (6) may be moved, wherein switch points (7a, 7b, 7c) are provided for conducting the transport units (6) to the various delivery locations.

2. Sorting device according to Claim 1, **characterized in that** one transport path leads from each of multiple delivery locations back to the pickup location without passing by the other delivery locations.

3. Sorting device according to Claim 1 or 2, **characterized in that** rails, guides, tracks, or magnetic or pneumatic levitation units are provided for the transport units (6).

4. Sorting device according to one of Claims 1 through 3, **characterized in that** chains, bands, rubber belts, electromagnetic alternating fields, or air streams are provided as the drive for the transport units (6).

5. Sorting device according to Claim 4, **characterized in that** the drive is provided on the transport units (6).

6. Sorting device according to one of Claims 1 through 5, **characterized in that** the holding devices (13, 16) include clamps (13), bells (16), suction units, grippers, or clamping jaws for holding the piece goods (2a, 2b, 2c).

7. Sorting device according to one of Claims 1 through 6, **characterized in that** the holding device (13, 16) is adjustable, preferably height-adjustable, with respect to the transport unit (6).

8. Sorting device according to one of Claims 1 through 7, **characterized in that** a delivery belt (3) is provided at the pickup location, by means of which the piece goods (2a, 2b, 2c) may be conveyed to the pickup location.

9. Sorting device according to one of Claims 1 through 8, **characterized in that** the delivery locations include discharge units (4a, 4b, 4c) for discharging the piece goods (2a, 2b, 2c) from the particular delivery location, whereby the speed of the transport unit (6) may preferably be adapted to a discharge unit (4a, 4b, 4c) at delivery.

10. Sorting device according to one of Claims 1 through 9, **characterized in that** the delivery may be carried out in pickup units, such as bottle crates (20), at the delivery locations.

11. Sorting device according to Claim 10, **characterized in that** a transport unit, such as a conveyor belt or a positioning means, is provided for the pickup units, by means of which the pickup unit may be positioned at the delivery location, at least in the direction transverse to the direction of transport of the transport units (6).

12. Sorting device according to one of Claims 1 through 11, **characterized in that** the holding devices (13, 16) are designed for holding the head or the collar of a PET bottle.

13. Sorting device according to one of Claims 1 through 12, **characterized in that** each transport unit (6) includes identification, for example in the form of a bar code, a readable memory, or an affixed alphanumeric code.

14. Sorting device according to Claim 13, **characterized in that** the sorting device includes at least one identification detection unit for detecting the identification of the transport unit (6), thus allowing the transport unit (6) to be conducted to the intended delivery location.

15. Sorting device according to one of Claims 1 through 14, **characterized in that** a control unit, such as a process computer (10), is provided for conducting the transport units (6).

16. Sorting device according to one of Claims 1 through 15, **characterized in that** each transport unit (6) has an information memory which may be mechanical, electronic, or optical, for example, in which the destination delivery location may be stored.

17. Sorting device according to Claim 16, **characterized in that** reading units (11 a, 11b, 11c) are provided for reading out the information memory between the pickup location and the delivery location.

18. Sorting device according to one of Claims 16 or 17, **characterized in that** a unit (23) is provided at the pickup location for storing information in the information memory.

19. Sorting device according to one of Claims 1 through 18, **characterized in that** an inspection unit (9) is provided for inspecting the piece goods (2a, 2b, 2c), by means of which the piece goods (2a, 2b, 2c) may be investigated for features which are relevant for the sorting, such as the external shape, filling, scuffing, tears, ruptures, soiling, type of piece goods, transparency, color, label condition, wear condition, or the like.

20. Method for conveying or sorting piece goods, in particular bottles, comprising the following steps: Picking up piece goods at a pickup location by means of holding devices, transporting the piece goods in the holding devices and delivering the piece goods to a delivery location, the holding devices (13, 16) being situated at individual transport units (6) which may be conducted from the pickup location to at least one selectable piece goods handling or delivery location while being individually controlled, **characterized by** a transport path network (5, 8a, 8b, 8c) on which the transport units (6) may be moved, wherein switch points (7a, 7b, 7c) are provided for conducting the transport units (6) to the various delivery locations.

## Revendications

1. Dispositif de tri d'articles, tels que des bouteilles par exemple, comportant au moins un poste de réception et une pluralité de postes de transfert, ainsi que des dispositifs de saisie pour saisir les articles, dans lequel les dispositifs de saisie (13, 16) sont agencés sur des unités de transport (6) individuelles qui peuvent être menées par guidage individuel d'un poste de réception à un poste de transfert sélectionnable, **caractérisé par** un réseau de transporteurs (5, 8a, 8b, 8c) sur lequel les unités de transport (6) peuvent être déplacées, dans lequel des aiguillages (7a, 7b, 7c) sont pourvus pour mener les unités de transport (6) aux différents postes de transfert.

2. Dispositif de tri selon la revendication 1, **caractérisé en ce que**, parmi une multiplicité de postes d'enlèvement, un transporteur reconduit toujours aux postes de réception sans passer devant les autres postes de transfert.

3. Dispositif de tri selon la revendication 1 ou 2, **caractérisé en ce que** des rails, des guides, des pistes ou des voies à suspension magnétique ou pneumatique sont pourvus pour les unités de transport (6).

4. Dispositif de tri selon l'une des revendications 1 à 3, **caractérisé en ce que** des chaînes, des bandes, des courroies élastomères, des champs électromagnétiques alternatifs, des champs magnétiques ou des flux pneumatiques sont pourvus pour l'entraînement des unités de transport (6).

5. Dispositif de tri selon la revendication 4, **caractérisé en ce que** l'entraînement est agencé sur les unités de transport (6).

6. Dispositif de tri selon l'une des revendications 1 à 5, **caractérisé en ce que** les dispositifs de saisie (13, 16) comportent des agrafes (13), des tulipes (16), des ventouses, des pinces ou des mâchoires pour saisir l'article (2a, 2b, 2c).

7. Dispositif de tri selon l'une des revendications 1 à 6, **caractérisé en ce que** la position du dispositif de saisie (13, 16) par rapport à l'unité de transport (6) peut être ajustée, et préférablement ajustée en hauteur.

8. Dispositif de tri selon l'une des revendications 1 à 7, **caractérisé en ce qu'**une bande d'alimentation (3) est pourvue au poste de réception, permettant d'amener l'article (2a, 2b, 2c) au poste de réception.

9. Dispositif de tri selon l'une des revendications 1 à 8, **caractérisé en ce que** les postes de transfert comportent des convoyeurs d'enlèvement (4a, 4b, 4c) pour enlever l'article (2a, 2b, 2c) du poste de transfert, moyennant quoi un changement de la vitesse de l'unité de transport (6) peut préférablement être effectuée sur un convoyeur d'enlèvement (4a, 4b, 4c) lors du transfert.

10. Dispositif de tri selon l'une des revendications 1 à 9, **caractérisé en ce que** le transfert aux postes de transfert peut être effectué dans des unités de réception, telles que des casiers de bouteilles (20).

11. Dispositif de tri selon la revendication 10, **caractérisé en ce qu'**un dispositif de transport est pourvu pour les unités de réception, tel qu'un convoyeur à bande ou un moyen de positionnement, par rapport auquel l'unité de réception peut être agencée au poste de transfert au moins perpendiculairement à la direction de transport de l'unité de transport (6).

12. Dispositif de tri selon l'une des revendications 1 à 11, **caractérisé en ce que** les dispositifs de saisie (13,16) sont conçus pour saisir la bouche ou le goulot d'une bouteille en PET.

13. Dispositif de tri selon l'une des revendications 1 à 12, **caractérisé en ce que** chaque unité de transport (6) comporte un identifiant, par exemple sous la forme d'un code-barres, d'une mémoire lisible ou d'un code alphanumérique apposé.

14. Dispositif de tri selon la revendication 13, **caractérisé en ce que** le dispositif de tri comporte au moins un dispositif d'acquisition d'identifiant pour lire l'identifiant de l'unité de transport (6), de telle manière que l'unité de transport (6) puisse être menée jusqu'au poste de transfert prévu.

15. Dispositif de tri selon l'une des revendications 1 à 14, **caractérisé en ce qu'**un dispositif de commande, tel qu'un ordinateur industriel (10), est pourvu pour diriger les unités de transport (6).

16. Dispositif de tri selon l'une des revendications 1 à 15, **caractérisé en ce que** chaque unité de transport (6) comporte une mémoire de stockage d'information, qui peut être par exemple mécanique, électronique ou optique, dans laquelle le poste de transfert cible peut être enregistré.

17. Dispositif de tri selon la revendication 16, **caractérisé en ce que** des dispositifs de lecture (11a, 11b, 11c) sont pourvus pour lire la mémoire de stockage d'information entre le poste de réception et le poste de transfert.

18. Dispositif de tri selon l'une des revendications 16 ou 17, **caractérisé en ce qu'**un dispositif (23) de stockage d'information dans la mémoire de stockage d'information est pourvu au poste de réception.

19. Dispositif de tri selon l'une des revendications 1 à 18, **caractérisé en ce qu'**un dispositif d'inspection (9) est pourvu pour inspecter l'article (2a, 2b, 2c), à l'aide duquel des caractéristiques de l'article (2a, 2b, 2c) utiles pour le tri peuvent être examinées, telles que la forme externe, le remplissage, l'usure, la présence de fissures, cassures ou salissures, le type d'article, la transparence, la couleur, l'état de l'étiquette, l'étanchéité ou autres.

20. Procédé de transport ou de tri d'articles, et en particulier de bouteilles, comprenant les étapes consistant à : saisir l'article avec des dispositifs de saisie à un poste de réception, transporter l'article dans les dispositifs de saisie et transférer l'article à un poste de transfert, dans lequel les dispositifs de saisie (13, 16) sont agencés sur des unités de transport (6) individuelles qui peuvent être menées par contrôle individuel du poste de réception à au moins un poste sélectionnable de manipulation de l'article ou de transfert, **caractérisé par** un réseau de transporteurs (5, 8a, 8b, 8c) sur lequel les unités de transport (6) peuvent être déplacées, dans lequel des aiguillages (7a, 7b, 7c) sont pourvus pour mener les unités de transport (6) aux différents postes de transfert.
